# EUROPEAN PATENT APPLICATION

(11) **EP 2 648 366 A2**
(43) Date of publication of application: **09.10.2013**
(21) Application number: 13162497.5
(22) Date of filing: 05.04.2013
(51) Int. Cl.: H04L 12/24

(54) **Web-based management of a mobile broadband device**

(30) Priority: 05.04.2012 CN 201210097082
(71) Applicant: Huawei Device Co., Ltd., Longgang District Shenzhen Guangdong 518129 (CN)
(72) Inventor: Zhong, Zhen, 518129 Shenzhen (CN); Jin, Zhihao, 518129 Shenzhen (CN)
(74) Representative: Thun, Clemens

(57) **Abstract**

Embodiments of the present invention relate to a mobile broadband device and a method for processing a mobile broadband service of the mobile broadband device. The mobile broadband device includes a Web application module and a Web server module. The Web application module, running in a browser on a host-side, is configured to provide a management interface of the mobile broadband device, receive a command input by a user, and generate a device management request message complying with a Web management interface. The Web server module, running in the mobile broadband device, is configured to parse the device management request message, and make a response. With this architecture, the mobile broadband device can adapt to the requirement of a user better and faster.

## Description

### FIELD OF THE INVENTION

The present invention relates to the communications field, and in particular, to a mobile broadband device and a method for processing a mobile broadband service of the mobile broadband device.

### BACKGROUND OF THE INVENTION

Mobile broadband (Mobile broadband, abbreviated to MBB) is a new field booming in recent years, and a 3G data card (or 3G USB Modem) therein is a typical mobile broadband device. More and more mobile broadband applications, such as mobile blogging and short message service (short message service, abbreviated to SMS) are presented continuously. Due to better experience, users are increasingly accustomed to Internet access by using mobile phones and portable terminals (such as tablet computers, netbooks, and E-ink readers).

At present, a majority of mobile broadband devices support a single operating system (operating system, abbreviated to OS). Taking data cards as an example, mainstream data cards from manufacturers in the industry are provided with client software for managing the data cards, so that the data cards implement services such as dial-up access, the short message service, and phone book. A mobile broadband device may be applied in various devices such as a personal computer (Personal Computer, abbreviated to PC) and an embedded device. However, the operating systems on PCs are not unified, and each operating system has its own development platform and programming language and the corresponding sub-version. The operating systems of embedded devices are even more diversified. Therefore, diversification of operating systems adds to difficulty in the design of mobile broadband devices.

Because new mobile broadband applications emerge continuously and the requirements of customers change constantly, manufacturers of mobile broadband devices can hardly adapt to such requirements. Therefore, it is necessary to separate the development of applications from the manufacturing of mobile broadband devices.

### SUMMARY OF THE INVENTION

Embodiments of the present invention provide a mobile broadband device and a method for processing a mobile broadband service of the mobile broadband device can overcome the above problem.

In a first aspect, an embodiment of the present invention provides a mobile broadband device. The mobile broadband device includes a Web application module and a Web server module. The Web application module, running in a browser on a host-side, is configured to provide a management interface of the mobile broadband device, receive a command input by a user, and generate a device management request message complying with a Web management interface. The Web server module, running in the mobile broadband device, is configured to parse the device management request message, and make a response.

In a second aspect, an embodiment of the present invention provides a method for mobile broadband service processing of a mobile broadband device. The method includes: receiving a device management request message, where the device management request message is in an HTTP format; parsing the device management request message; and invoking an application programming interface corresponding to the device management request message to respond to the device management request message.

By adding a Web server module, the embodiments of the present invention provide a basis for defining functional components, so that it is easier to add applications of various functions and that it is only necessary to pay attention to the interface presentation of the mobile broadband device, thereby enhancing extensibility of functional components for managing the mobile broadband device.

By defining functional components, the embodiments of the present invention define a unified interface for managing the mobile broadband device in a Web mode, and provide a standard for performing Web management for the mobile broadband device. Device manufacturers may implement only the Web management module and provide functional components; software developers do not depend on device manufacturers any longer, and may develop Web management module software for mobile broadband devices of all manufacturers by only invoking unified functional components. With this architecture, the mobile broadband device can adapt to the requirement of a user better and faster.

### BRIEF DESCRIPTION OF THE DRAWINGS

The following further describes the technical solutions of the present invention in detailed with reference to the accompanying drawings and embodiments. In the drawings:

FIG. 1 is a schematic diagram of management of a mobile broadband device according to an embodiment of the present invention;

FIG. 2 is a schematic structural diagram of an MBB device; and

FIG. 3 is a schematic diagram of a RESTful interface.

### DETAILED DESCRIPTION OF THE EMBODIMENTS

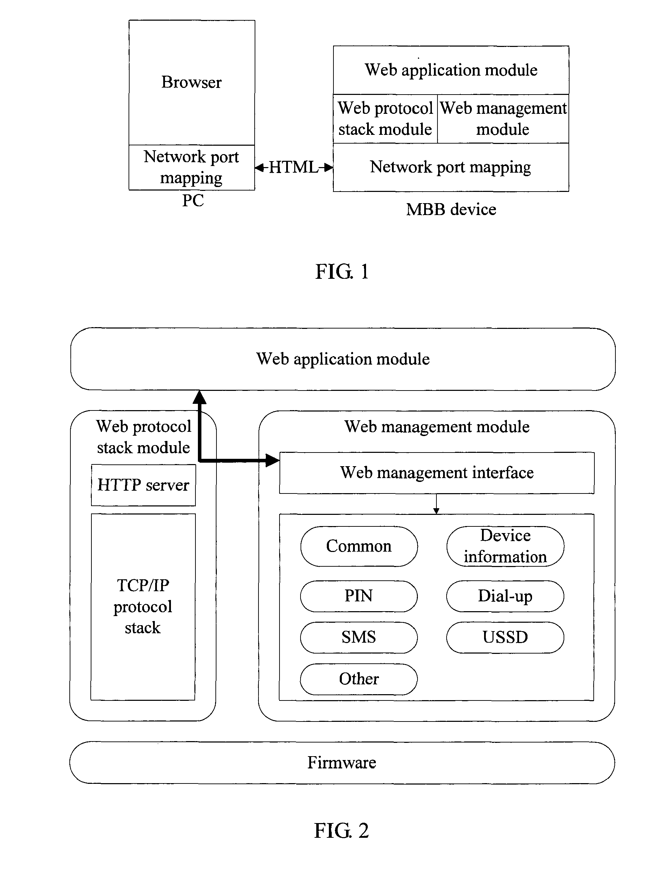

FIG. 1 is a schematic diagram of management of a mobile broadband device according to an embodiment of the present invention. On the left side is an MBB management entity, namely, a PC in FIG. 1. On the right side is an MBB device. When the MBB device is connected to the MBB management entity through an interface (for example, a USB interface), the MBB management entity may virtually map the MBB device to a network card device through the corresponding driver, so that the MBB device and the MBB management entity exchange data.

An Internet browser is installed on the MBB management entity, for example, an IE (Internet Explorer) browser or a Firefox browser. The browser may exchange data with the MBB device through the HTTP protocol and obtain the Web management interface, and then the MBB management entity manages the MBB device based on the Web management interface in a Web page mode. The Web management interface may include some Web page information, where the Web page information is specified by a URL (Uniform Resource Locator), and its file format is usually HTML (Hypertext Markup Language) and is specified by the MIME (Multipurpose Internet Mail Extensions protocol) in the HTTP protocol. One piece of Web page information may include multiple documents. In this example, the MBB management entity may be a PC, but it may also be devices of other types (including an embedded device).

### Embodiment 1

The embodiment of the present invention provides a mobile broadband device, where the mobile broadband device includes a Web application module and a Web server module. The Web application module, running in a browser on a host-side, is configured to provide a management interface of the mobile broadband device, receive a command input by a user, and generate a device management request message complying with a Web management interface. The Web server module, running in the mobile broadband device, is configured to parse the device management request message, and make a response.

Preferably, the Web server module includes: a Web protocol stack module and a Web management module, where: the Web protocol stack module, running in the mobile broadband device, is configured to parse the device management request message and send the message to the Web management module that executes the command. The Web management module, running in the mobile broadband device, is configured to invoke an application programming interface corresponding to the device management request message, and execute the command to respond to the device management request message.

Specifically, the Web application module provides Web management interfaces of various functions for managing the MBB device, so that a user can manage the MBB device on the MBB management entity in a Web page mode. Implementation of various functions provided by the Web management interface needs an application programming interface (Web API) complying with the Web management, so that the mobile broadband management entity can generate, according to the user input related to the functions, a device management request message complying with the Web management interface. The following describes the Web management interface in detail. The Web management interface may be the HTML Web page mentioned above, and may have a JavaScript (JS) script, a CSS (Cascading Style Sheet) script, and so on.

The Web protocol stack module is configured to assist the Web application module, so that the Web management interface is presented on the MBB management entity. With the Web protocol stack module, the browser can access the HTML Web page provided in the Web application module, so that the MBB device becomes a "Web server". When loading the interface part in the Web application module, the browser presents, to the user, an operation interface of various functions for managing the MBB device. The Web protocol stack module is further configured to forward data between the Web application module and the Web management module.

The Web application module is the logical part of service implementation, and provides an application programming interface (Web API) of various functions for management. The MBB management entity may invoke, through the Web application module, the application programming interface provided by the Web management module.

Specifically, when loading the interface part in the Web application module, the browser presents, to the user, an operation interface of various functions for managing the MBB device, thus implementing management of the MBB device in the Web mode. The MBB management entity obtains, from the Web application module in the browser, the user input for a specific function; according to the function corresponding to the user input, generates a device management request message complying with the Web API of the function; and then sends the device management request message to the MBB device.

In the MBB device, when the MBB device receives the device management request message from the MBB management entity, the Web protocol stack module first parses the device management request message, and sends the device management request message to the Web management module when determining that the device management request message is a device management request. The Web management module invokes the corresponding application programming interface by parsing the device management request message, and completes processing of the device management request message, and returns a response to the MBB management entity through the Web protocol stack module.

By adding a Web management module, the embodiment of the present invention provides a basis for defining the Web API, so that it is easier to add applications of various functions and that it is only necessary to pay attention to the interface presentation of the MBB device, thereby enhancing extensibility of the Web API for managing the mobile broadband device.

By defining the Web API of the MBB device, the embodiment of the present invention defines a unified interface for managing the mobile broadband device in a Web mode, and provides a standard for performing Web management for the MBB device. Device manufacturers may implement only the Web management module and provide a Web API; software developers do not depend on device manufacturers any longer, and may develop Web management software for MBB devices of all manufacturers by only invoking the unified Web API of the mobile broadband device. With this architecture, the mobile broadband device can adapt to the requirement of a user better and faster.

FIG. 2 is a schematic structural diagram of an MBB device. In FIG. 2, the Web protocol stack module includes an HTTP server submodule, configured to parse the Web communication between the MBB management device and the MBB device. The HTTP server submodule enables the MBB device to be a "Web server"; thereby, the browser of the MBB management entity can access the Web page in the HTML format provided by the Web application module.

The Web protocol stack module further includes a TCP/IP protocol stack submodule configured to identify the data sent by the MBB management entity. When the TCP/IP protocol stack submodule identifies the management command included in the data, the TCP/IP protocol stack submodule forwards the data to the Web management module according to the IP address.

The Web management module includes an application programming interface of each application function, namely, a Web API. The Web API includes but is not limited to a common function programming interface (namely, a common API), a device information query programming interface (namely, a device information API), a personal identification number PIN management programming interface (namely, a PIN management API), a dial-up access programming interface (namely, a dial-up access API), a short message function programming interface (namely, a short message API), and an unstructured supplementary service data USSD function programming interface (namely, a USSD API).

The lowest part of the mobile broadband device is firmware for implementing the lowest -layer service and protocol processing.

Specifically, after the user opens the browser, the user inputs the website (for example, http://192.168.1.1/index.html) or IP address of the mobile broadband device. In the Web protocol stack module, the TCP/IP protocol stack submodule identifies, according to the website or IP address, whether the data sent by the MBB device is management data. If yes, the HTTP server submodule of the Web protocol stack module extracts the management data. The Web protocol stack module sends the extracted management data to the Web application module. The Web application module enables, through the HTTP server submodule, the host-side device to present the Web management interface (which may be regarded as a virtual Web application module) provided by the Web application module.

When the user inputs, on the Web management interface, a command for managing the MBB device, the browser sends a device management request message to the MBB device, where the device management request message complies with a corresponding Web API. The Web protocol stack module receives the device management request message; and when identifying that the device management request message is a management command, the Web protocol stack module sends the device management request message to the Web management module. After receiving the device management request message, the Web management module invokes, according to the device management request message, the corresponding Web API to execute the management command.

Then the Web management module sends the execution result of the management command to the MBB management entity through the Web protocol stack module. The browser updates the management page content based on the execution result, so that the host-side device presents the updated management page.

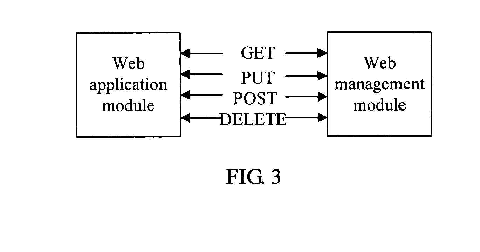

The Web API interface is a Web service interface. In an embodiment, an interface of the RESTful (Representational State Transfer, representational state transfer) style is selected as a Web API. FIG. 3 is a schematic diagram of a RESTful interface. The main feature of the RESTful style is using a standard HTTP method, such as GET, PUT, POST, and DELETE commands, to operate Web resources. In FIG. 3, the Web application module (in the browser) operates various functional components in the Web management module. Certainly, the present invention may further include interfaces of other styles.

### Embodiment 2

The embodiment of the present invention provides a method for mobile broadband service processing of a mobile broadband device. The method includes: receiving a device management request message, where the device management request message is in an HTTP format; parsing the device management request message; and invoking an application programming interface corresponding to the device management request message to respond to the device management request message. For the specific generation process, format, and parsing of the device management request message, and invoking of the application programming interface, reference may be made to Embodiment 1, and no repeated description is provided here.

The Web API interface in the present invention corresponds to different functions. For the purpose of illustration, the following uses some examples of specific implementation of typical Web APIs. However, the present invention is not limited to the following Web APIs.

**(a) Short message API**

The short message API (namely, a short message function programming interface) is an application programming interface for implementing the short message function, and mainly implements functions of sending, receiving, and setting a short message. The following uses sending as an example to specifically explain the short message API.

In step 1, the short message API obtains a device management request message from the Web management entity through the Web management module. Specifically, the Web protocol stack module parses the device management request message from the Web management entity, where the device management request message includes a command for requesting a short message operation. Therefore, the Web protocol stack module obtains the command for the short message operation, and the Web management module invokes the short message function programming interface.

The following is an example of the device management request message.

POST /api/sms/send HTTP/1.1

```
          <?xml version="1.0" encoding="UTF-8"?>
          <api version=" 1.0">
           <request>
               <number>13512345678</ number >
               <body>This is a demo sms text.</ body >
           </request>
          </api>
```

The device management request message includes short message operation information. The request method part (API/sms/send) indicates that it is a short message sending request. The <number> field in the HTTP request indicates the destination phone number of the short message operation, and the <body> field indicates short message operation content.

In step 2, the short message API parses the short message operation information in the device management request message. Specifically, after obtaining the short message operation information, by parsing the fields in the information, the short message API determines the destination terminal identifier (a phone number of the recipient in this example) of the short message operation and the short message operation content.

The following table is an example of the destination number and content parsed from the short message operation.

| Field Name | Type | Length | Description |
|---|---|---|---|
| number | String | 31 | Phone number of the recipient |
| body | String | 1000 | Short message text content to be sent |

In step 3, the short message API sends short message operation execution information to the firmware.

After obtaining the destination terminal identifier of the short message operation and short message operation content, the short message API sends short message operation execution information to the corresponding firmware. The execution information can include the destination terminal identifier and short message operation content. After receiving the operation execution information, the firmware executes a short message sending action and returns an operation success response to the short message API.

In step 4, the short message API sends the following return information through an HTTP response of the Web management module:

```
          <?xml version="1.0" encoding="UTF-8"?>
          <response>ok</response>
```

After receiving the operation success response executed and returned by the firmware, the short message API sends execution success information to the Web application module in the browser in the MBB management entity through the Web management module, and carries an operation success identifier through the <response> field.

| Field Name | Type | Length | Description |
|---|---|---|---|
| response | String | 2 | Execution result of sending the short message |

**(b) Common API**

The common API (namely, a common function programming interface) is an application programming interface for functional component version query and/or error processing, and mainly implements common functions.

The following describes each common function of the API.

**(b.1) Querying for the API version**

When querying for the API version, the common API performs the following steps.

In step 1, the common API obtains a device management request message from the Web management entity through the Web management module, where the device management request message is in the HTTP format. Specifically, the Web protocol stack module parses the device management request message in the HTTP format, where the device management request message includes a command for requesting a functional component (API) version query; thereby the command for requesting the functional component version query is obtained; the Web management module invokes the common API based on the command for requesting the functional component version query. For example, the device management request message may be:

GET /api/device/api-version HTTP/1.1.

In step 2, the common API parses the command for requesting the functional component (API) version query in the device management request message to obtain the interface version information.

In step 3, the common API sends component version query information to the firmware.

In step 4, the common API sends return information to the Web application module in the browser in the MBB management entity through an HTTP response of the Web management module. For example, the return information is:

```
          <?xml version="1.0" encoding="UTF-8"?>
          <response>
           <version>ver</version>
          </response>
```

The response information includes version information desired by the management request. The Version field indicates the version number of the API.

| Field Name | Type | Length | Description |
|---|---|---|---|
| Version | String | 100 | API version number |

**(b.2) Error processing**

The error processing API performs the following steps.

For any device management request message from the Web management module, if an exception or error occurs in the MBB device, the common API returns the following error information through an HTTP response of the Web management module to notify the server of the error.

In a return message, the <code> field carries an error type, and optionally the <message> field carries an error message. The following is an example of the return message.

```
          <?xml version="1.0" encoding="UTF-8"?>
          <error>
           <code>error code n</code>
           <message>error message xxx</message>
          </error>
```

The following table is an example of information carried in the return message.

| Field Name | Type | Length | Description |
|---|---|---|---|
| code | Integer | 5 | Error code, [0, 65535]. |
| | | | For the error code, reference may be made to the error code table. |
| message | String | 100 | Error message, optional. This field may be null. |

The following table is an example of the error code table.

| Error Code | Type | Description |
|---|---|---|
| 1 | General error | Unknown error type. |
| 2 | | The request is not supported. |
| 3 | | Unauthorized. |
| 4 | | The system is busy. |
| 5 | | The request format is erroneous. |

**(c) Device information API**

The device information API (namely, the device information query programming interface) is an application programming interface for querying device basic information, and mainly implements the function of querying device basic information. Specifically the following steps are performed.

In step 1, the device information API obtains, from the Web management entity, a device management request message in the HTTP format through the Web management module. Specifically, the Web protocol stack module parses the device management request message, where the device management request message includes a command for requesting to query for device basic information; thereby the command for querying device basic information is obtained. The Web management module invokes the device information API based on the command for querying device basic information. For example, the device management request message may be:

GET /api/device/information HTTP/1.1.

In step 2, the device information API parses the command for requesting to query for device basic information in the device management request message.

In step 3, the device information API sends device information query information to the firmware.

In step 4, the device information API sends the return information through an HTTP response of the Web management module.

For example, the HTTP response may be:

```
          <?xml version="1.0" encoding="UTF-8"?>
          <response>
            <name>E5830S</name>
            <serialNmber>A0000000000</serialNmber>
            <imsi>35010000000000</imei>
            <imsi>460080000000</imsi> .
            <spn>Huawei</spn>
            <phoneNumber> 13 80013 8000</phoneNumber>
            <hardware Version>WLAGCPU</hardware Version>
            <software Version>996.11.00.01.100</software Version>
            <uptime>01:02:50</uptime>
            <macAddress>00:1E:10:0E:22:33</macAddress>
          </response>
```

The response may carry the device information of the MBB device through multiple fields (shown in the following table).

| Field Name | Type | Length | Description |
|---|---|---|---|
| name | String | 31 | Product name |
| serialNumber | String | 31 | Serial number |

| | | | |
|---|---|---|---|
| imei | String | 31 | IMEI number (international mobile station equipment identity number) |
| imsi | String | 31 | IMSI number (international mobile subscriber identity) |
| spn | String | 31 | Spn (secure private network) |
| phoneNumber | String | 31 | Phone number |
| hardware Version | String | 31 | Hardware version |
| software Version | String | 31 | Software version |
| uptime | String | 31 | Runtime |
| macAddress | String | 31 | Medium access control layer MAC address |

**(d) PIN management API**

The PIN management API is an application programming interface for managing the PIN of the mobile broadband device.

(d.1) Querying for the PIN (Personal Identification Number, personal identification number) state: mainly implementing the function of querying the PIN of the device

In step 1, the PIN management API obtains, from the Web management entity, a device management request message in the HTTP format through the Web management module. Specifically, the Web protocol stack module parses the device management request message, where the device management request message includes a command for requesting to query for the PIN of the mobile broadband device; thereby the command for querying the PIN of the mobile broadband device is obtained; the Web management module invokes the PIN management API based on the command for querying the PIN of the mobile broadband device. For example, the device management request message may be:

GET /api/pin/status HTTP/1.1.

In step 2, the PIN management API parses the operation information in the device management request message.

In step 3, the PIN management API sends PIN query information to the firmware.

In step 4, the PIN management API sends return information through an HTTP response of the Web management module. For example, the HTTP response may be:

```
          <?xml version="1.0" encoding="UTF-8"?>
          <response>
            <simState>simState</simState>
            <pinOptState>pinOptState</pinOptState>
            <savePinState>savePinState</savePinState>
           <simPinTimes>simPinTimes</simPinTimes>
           <simPukTimes>simPukTimes</simPukTimes>
          </response>
```

In the response, multiple fields carry the PIN-related information. The following table is an example of fields carried therein.

| Field Name | Type | Length | Description |
|---|---|---|---|
| simState | Integer | 3 | SIM card state |
| | | | 255: no SIM card or invalid card |
| | | | 257: SIM ready |
| | | | 260: PIN required |
| | | | 261: PUK required |
| pinOptState | Integer | 1 | Operation type for the SIM card |
| | | | 256: PIN failure |
| | | | 258: PIN disabled |
| | | | 259: PIN validated |
| savePinState | Integer | 1 | Whether the SIM card saves the PIN state [0, 1] |
| | | | 1: PIN saved |
| | | | 0: PIN not saved |
| simPinTimes | Integer | 1 | Remaining times of inputting the PIN of the SIM card [0-3] |
| simPukTimes | Integer | 2 | Remaining times of inputting the PUK code of the SIM card [0-10] |

(d.2) PIN operation

In step 1, the PIN management API obtains, from the Web management entity, a device management request message in the HTTP format through the Web management module. Specifically, the Web protocol stack module parses the device management request message, where the device management request message includes a command for operating the PIN of the mobile broadband device; thereby the command for operating the PIN of the mobile broadband device is obtained; the Web management module invokes the PIN management API based on the command for querying for the PIN of the mobile broadband device. For example, the content of the device management request message may be:

POST /api/pin/operate HTTP/1.1

```
          <?xml version="1.0" encoding="UTF-8"?>
          <request>
            <operateType>operateType</operateType>
            <currentPin>currentPin</currentPin>
            <newPin>newPin</newPin>
            <puk>puk</puk>
          </request>
```

In this request, multiple fields carry information of the PIN operation. The following table is an example of fields carried therein.

| Field Name | Type | Length | Description |
|---|---|---|---|
| operateType | Integer | 1 | Operation type, [0, 4] |
| | | | 0: PIN authentication |
| | | | 1: PIN enabling |
| | | | 2: PIN disabling |
| | | | 3: PIN change |
| | | | 4: PUK unlocking |
| currentPin | Integer | 8 | Input PIN |
| newPin | Integer | 8 | Input new PIN |

In step 2, the PIN management API parses the operation information in the device management request message.

In step 3, the PIN management API sends PIN operation information to the firmware.

In step 4, the PIN management API sends return information through an HTTP response of the Web management module. For example, the response is in the following form:

```
          <?xml version="1.0" encoding="UTF-8"?>
          <response>OK</response>
```

The return response carries an operation success message. The following table is an example of information carried therein.

| Field Name | Type | Length | Description |
|---|---|---|---|
| Response | String | 2 | OK: success |

**(e) Dial-up access API**

The dial-up access API is an application programming interface for implementing the dial-up access function of the mobile broadband device, and implements Web invoking of the dial-up function of the MBB device.

In step 1, the dial-up access API obtains, from the Web management entity, a device management request message in the HTTP format through the Web management module. Specifically, the Web protocol stack module parses the device management request message, where the device management request message includes a command for requesting dial-up access; thereby the command for requesting dial-up access is obtained. The Web management module invokes the dial-up access API based on the command for requesting dial-up access. For example, the device management request message may be:

POST /api/dialup/dial HTTP/1.1

```
          <?xml version="1.0" encoding="UTF-8"?>
          <request>
           <action> 1 </action>
          </request>
```

In the request, the <action> field carries the type of the dial-up operation, as shown in the following table:

| Field Name | Type | Length | Description |
|---|---|---|---|
| Action | Integer | 1 | Dial-up, [0, 1] |
| | | | 0: disconnection |
| | | | 1: dial-up |

In step 2, the dial-up access API parses the operation information in the device management request message.

In step 3, the dial-up access API sends dial-up operation information to the firmware.

In step 4, the dial-up access API sends the following return information through an HTTP response of the Web management module: The response may be in the following form:

```
          <?xml version="1.0" encoding="UTF-8"?>
          <response>OK</response>
```

The return response carries an operation success message. The following table is an example of information carried therein.

| Field Name | Type | Length | Description |
|---|---|---|---|
| response | String | 2 | OK |

**(f) USSD API**

The USSD API, namely, the USSD function programming interface, is an application programming interface for executing a USSD command, and is mainly used for Web invoking of the function of sending USSD (Unstructured Supplementary Service Data, unstructured supplementary service data).

In step 1, the USSD API obtains, from the Web management entity, a device management request message in the HTTP format through the Web management module. Specifically, the Web protocol stack module parses the device management request message, where the device management request message includes a USSD command requested to be executed; thereby the USSD command requested to be executed is obtained; the Web management module invokes the USSD API based on the USSD command requested to be executed. For example, the device management request message may be in the following form:

POST /api/ussd/send HTTP/1.1

```
         <?xml version="1.0" encoding="UTF-8"?>
         <api version="1.0">
           <request>
               <content>Content</content>
               <codeType>codetype</codeType>
            </request>
          </api>
```

In the request, the <content> field carries USSD command content, or the <codeType> carries the type of the USSD command. The following table is an example of information carried therein.

| Field Name | Type | Length | Description |
|---|---|---|---|
| Content | String | 184 | Sent USSD command content |
| codeType | Integer | 4 | Interface reserved for future extension, and not used at present |

In step 2, the USSD API parses the operation information in the HTTP request.

In step 3, the USSD API sends USSD operation information to the firmware.

In step 4, the USSD API sends the following return information through an HTTP response of the Web management module:

```
          <?xml version="1.0" encoding="UTF-8"?>
          <response>ok</response>
```

The return response carries an operation success message. The following table is an example of information carried therein.

| Field Name | Type | Length | Description |
|---|---|---|---|
| Response | String | 2 | Result of executing the USSD command |

It should be noted that each parameter in the API may be extended, modified, or deleted according to requirements.

**Other service APIs**

The specification only lists typical modules and APIs. The APIs may be extended constantly according to the idea, for example, services supporting the phone book and MMS multimedia messaging service.

By adding a Web management module, the present invention provides a basis for defining the Web API interface, so that it is easier to add Web application modules of various functions and that it is only necessary to pay attention to the interface presentation of the MBB device, thereby enhancing extensibility of the Web API for managing the MBB device.

Defining the MBB Web API is defining a unified interface for using the Web mode to manage the mobile broadband device, and providing a standard for performing Web management for the MBB device: device manufacturers may implement the Web management module only and provide a Web API interface; software developers do not depend on device manufacturers any longer, and may develop Web management software for MBB devices of all manufacturers by only invoking a unified MBB Web API interface.

The embodiments above clarify the objective, technical solutions, and benefits of the present invention in detail. It is understandable that these embodiments are some exemplary embodiments and are not intended to limit the protection scope of the present invention. Any modification, equivalent substitution, or improvement within the principle and idea of the present invention shall fall within the protection scope of the present invention.

## Claims

1. A mobile broadband device, comprising a Web application module and a Web server module, wherein:
the Web application module, running in a browser on a host-side, is configured to provide a management interface of the mobile broadband device, receive a command input by a user, and generate a device management request message complying with a Web management interface; and
the Web server module, running in the mobile broadband device, is configured to parse the device management request message, and make a response.

2. The mobile broadband device according to claim 1, wherein the Web server module comprises a Web protocol stack module and a Web management module, wherein:
the Web protocol stack module, running in the mobile broadband device, is configured to parse the device management request message and send it to the Web management module, so that the Web management module executes the command; and
the Web management module, running in the mobile broadband device, is configured to invoke an application programming interface corresponding to the device management request message, and execute the command to respond to the device management request message.

3. The mobile broadband device according to claim 2, wherein: the application programming interface comprises a short message function programming interface, wherein the short message function programming interface is an application programming interface for implementing a short message operation function; the device management request message comprises a command for requesting a short message operation; the Web protocol stack module parses the device management request message to obtain the command for the short message operation; and the Web management module invokes the short message function programming interface, executes the command for the short message operation, and returns an execution result.

4. The mobile broadband device according to claim 2, wherein: the application programming interface comprises a common function programming interface, wherein the common function programming interface is an application programming interface for functional component version query and/or error processing; the device management request message comprises a command for functional component version query and/or error processing; the Web protocol stack module parses the device management request message to obtain the command for functional component version query and/or error processing; and the Web management module invokes the common function programming interface, executes the command for functional component version query and/or error processing, and returns an execution result.

5. The mobile broadband device according to claim 2, wherein: the application programming interface comprises a device information query programming interface, wherein the device information query programming interface is an application programming interface for querying device basic information; the device management request message comprises a command for requesting to query device basic information; the Web protocol stack module parses the device management request message to obtain the command for querying device basic information; and the Web management module invokes the device information query programming interface, executes the command for querying device basic information, and returns an execution result.

6. The mobile broadband device according to claim 5, wherein the device basic information comprises one or more of product name, serial number, international mobile station equipment identity number, international mobile subscriber identity, secure private network, phone number, hardware version, software version, runtime, and medium access control MAC address.

7. The mobile broadband device according to claim 2, wherein: the application programming interface comprises a personal identification number PIN management programming interface, wherein the PIN management programming interface is an application programming interface for querying a PIN of the mobile broadband device; the device management request message comprises a command for querying the PIN of the mobile broadband device; the Web protocol stack module parses the device management request message to obtain the command for querying the PIN of the mobile broadband device; and the Web management module invokes the PIN management programming interface, executes the command for querying the PIN of the mobile broadband device, and returns an execution result.

8. The mobile broadband device according to claim 2, wherein: the application programming interface comprises a dial-up access programming interface, wherein the dial-up access programming interface is an application programming interface for implementing a dial-up access function of the mobile broadband device; the device management request message comprises a command for requesting dial-up access; the Web protocol stack module parses the device management request message to obtain the command for dial-up access; and the Web management module invokes the dial-up access programming interface, executes the command for dial-up access, and returns an execution result.

9. The mobile broadband device according to claim 2, wherein: the application programming interface comprises an unstructured supplementary service data USSD function programming interface, wherein the USSD function programming interface is an application programming interface for executing a USSD command; the device management request message comprises a USSD command requested to be executed; the Web protocol stack module parses the device management request message to obtain the USSD command requested to be executed; and the Web management module invokes the USSD function programming interface, executes the USSD command according to the USSD function programming interface, and returns an execution result.

10. A method for mobile broadband service processing of a mobile broadband device, comprising:
receiving a device management request message, wherein the device management request message is in an HTTP format; and
parsing the device management request message, and invoking an application programming interface corresponding to the device management request message to respond to the device management request message.

11. The method according to claim 10, wherein: the application programming interface comprises a short message function programming interface, wherein the short message function programming interface is an application programming interface for implementing a short message operation function; the device management request message comprises a command for requesting a short message operation; and
the parsing the device management request message, and invoking an application programming interface corresponding to the device management request message to respond to the device management request message comprise: parsing the device management request message to obtain the command for the short message operation, invoking the short message function programming interface, executing the command for the short message operation, and returning an execution result.

12. The method according to claim 10, wherein: the application programming interface comprises a common function programming interface, wherein the common function programming interface is an application programming interface for functional component version query and/or error processing; the device management request message comprises a command for requesting functional component version query and/or error processing; and
the parsing the device management request message, and invoking an application programming interface corresponding to the device management request message to respond to the device management request message comprise: parsing the device management request message to obtain the command for functional component version query and/or error processing, invoking the common function programming interface, executing the command for functional component version query and/or error processing, and returning an execution result.

13. The method according to claim 10, wherein: the application programming interface comprises a device information query programming interface, wherein the device information query programming interface is an application programming interface for querying device basic information; the device management request message comprises a command for requesting to query device basic information; and
the parsing the device management request message, and invoking an application programming interface corresponding to the device management request message to respond to the device management request message comprise: parsing the device management request message to obtain the command for querying device basic information, invoking the device information query programming interface, executing the command for querying device basic information, and returning an execution result.

14. The method according to claim 13, wherein the device basic information comprises one or more of product name, serial number, international mobile station equipment identity number, international mobile subscriber identity, secure private network, phone number, hardware version, software version, runtime, and MAC address.

15. The method according to claim 10, wherein: the application programming interface comprises a personal identification number PIN management programming interface, wherein the PIN management programming interface is an application programming interface for querying a PIN of the mobile broadband device; the device management request message comprises a command for requesting to query the PIN of the mobile broadband device; and
the parsing the device management request message, and invoking an application programming interface corresponding to the device management request message to respond to the device management request message comprise: parsing the device management request message to obtain the command for querying the PIN of the mobile broadband device, invoking the PIN management programming interface, executing the command for querying the PIN of the mobile broadband device, and returning an execution result.

16. The method according to claim 10, wherein: the application programming interface comprises a dial-up access programming interface, wherein the dial-up access programming interface is an application programming interface for implementing a dial-up access function of the mobile broadband device; the device management request message comprises a command for requesting dial-up access; and
the parsing the device management request message, and invoking an application programming interface corresponding to the device management request message to respond to the device management request message comprise: parsing the device management request message to obtain the command for requesting dial-up access, invoking the dial-up access programming interface, executing the command for dial-up access, and returning an execution result.

17. The method according to claim 10, wherein: the application programming interface comprises an unstructured supplementary service data USSD function programming interface, wherein the USSD function programming interface is an application programming interface for executing a USSD command; the device management request message comprises a USSD command requested to be executed; and
the parsing the device management request message, and invoking an application programming interface corresponding to the device management request message to respond to the device management request message comprise: parsing the device management request message to obtain the USSD command requested to be executed, invoking the USSD function programming interface, executing the USSD command according to the USSD function programming interface, and returning an execution result.
